# EUROPEAN PATENT SPECIFICATION

(11) **EP 0 395 169 B1**
(45) Date of publication and mention of the grant of the patent: **14.12.1994**
(21) Application number: 90201029.7
(22) Date of filing: 24.04.1990
(51) Int. Cl.: A22C 21/00

(54) **Poultry thigh disjointing method and apparatus**
Verfahren und Vorrichtung zum Abtrennen der Beine von Schlachtgeflügel
Procédé et appareil pour séparer les pattes de volailles abattues

(30) Priority: 24.04.1989 US 342576; 18.12.1989 US 452103
(43) Date of publication of application: 31.10.1990
(73) Proprietor: LINCO HOLLAND ENGINEERING B.V., NL-6983 BM Doesburg (NL)
(72) Inventor: Kessler, Lawrence J., Canton Ohio 44708 (US); Bolitho, Larry I., Massillon Ohio 44646 (US)
(74) Representative: Kooy, Leendert Willem

(56) References cited:
- EP-A- 0 164 167
- EP-A- 0 236 242
- NL-A- 7 904 779
- NL-A- 8 303 683
- US-A- 2 807 046
- US-A- 4 385 421
- US-A- 4 660 256
- US-A- 4 669 148

## Description

This invention relates to a method and apparatus for disjointing the thighs of poultry carcasses.

NL-A-83.03683 describes a device for separating the legs from the back part of slaughtered birds, in which the legs of the birds are spread out, in order to be able to cut the tendons at the hip joints, after which the hip joints are pulled apart. A first disadvantage of this known device is that this one only can work with the back parts of the birds. A second disadvantage is that this known device disjoints both joints, i.e. left and right, simultaneously so that there is a great chance of bone fracture. This bone fracture is of course very undesirable in connection with bone splinters and the presentation of the product. A third disadvantage is that with this known device the legs are completely separated from the back part.

The present invention provides a machine and apparatus which effectively disjoints the thigh joints of poultry carcasses at a reasonable speed, reduces manpower expenses, provides reliable operation, and minimizes maintenance and repair costs.

This invention relates to poultry processing machines for automatically disjointing the thigh joints of birds in a poultry processing facility. In such machines, means are provided for supporting the birds and conveying them in a bird processing direction, so that a first bird precedes a second bird as they move through the apparatus. First members are provided for contacting and positioning the breasts of the birds, and second members are provided for contacting the thighs on the back sides of the birds. Actuating means provide relative movement between the members to disjoint the thigh joints of the birds.

With the apparatus according to this invention complete slaughtered birds are being processed, from which no parts have been cut off. With the present apparatus the legs may be replaced in their original position after disjointing has taken place, so that visually there is practically no difference; the legs are not separated from the complete carcass. With the present apparatus more uniform cooking is possible.

According to a preferred embodiment of the invention, the apparatus is provided with two of the first members which are fixed relative to each other and are arranged to contact simultaneously the breast of the first bird and the breast of the second bird; two of the second members are fixed relative to each other and are arranged to contact simultaneously the thigh of the trailing leg of the first bird and the thigh of the leading leg of the second bird; and, the acutating means provides relative movement so that the two second members move toward the two first members simultaneously, or vice versa, to disjoint the thigh joint of the trailing leg of the first bird and the thigh joint of the leading leg of the second bird.

In the apparatus according to this application the thigh joints of each bird are disjointed after each other with an interval therebetween, so that the risk of bone fracture is reduced to practically zero.

Another aspect of the invention involves the improvement wherein a thigh disjointing machine has a rotating support; one set of the members is fixed to the rotating support; and, another set of the members is mounted on arms which are movably connected to the rotating support.

Preferably, a driven conveyor chain moves the birds through the apparatus, and means are provided for transmitting driving forces from the conveyor chain to the rotating member. The thigh engaging members are spaced farther apart than the breast engaging members, the two simultaneously acting breast engaging members converge toward each other in a downward direction, and the two simultaneously acting thigh contacting members also converge toward each other in a downward direction.

The invention also involves a method for automatically disjointing the thigh joints of birds. According to this method, a first pair of members are moved into contact (i) with a first bird in a region where its breast is connected to the thigh of its trailing leg, and (ii) with a second bird in a region where its breast is connected to the thigh of its leading leg. A pair of second members are moved into contact (i) with the first bird in a region where its back is connected to the thigh of its trailing leg and (ii) with the second bird in a region where its back is connected to the thigh of its leading leg. Relative movement is provided to force the pair of second members toward the pair of first members, or vice versa, in order simultaneously to disjoint the thigh joint of the trailing leg of the first bird and the thigh joint of the leading leg of the second bird.

The invention will be futher elucidated on the basis of a preferred embodiment, which is shown in the accompanying drawings, in which:
Fig. 1 is an elevational view of a machine, looking at a side of a bird which is in the process of being disjointed according to the invention;
Fig. 2 is a view similar to Fig. 1, with a broken line illustration of two birds having their thigh joints disjointed simultaneously; and
Fig. 3 is a perspective view showing the main components of a machine constructed according to the invention.

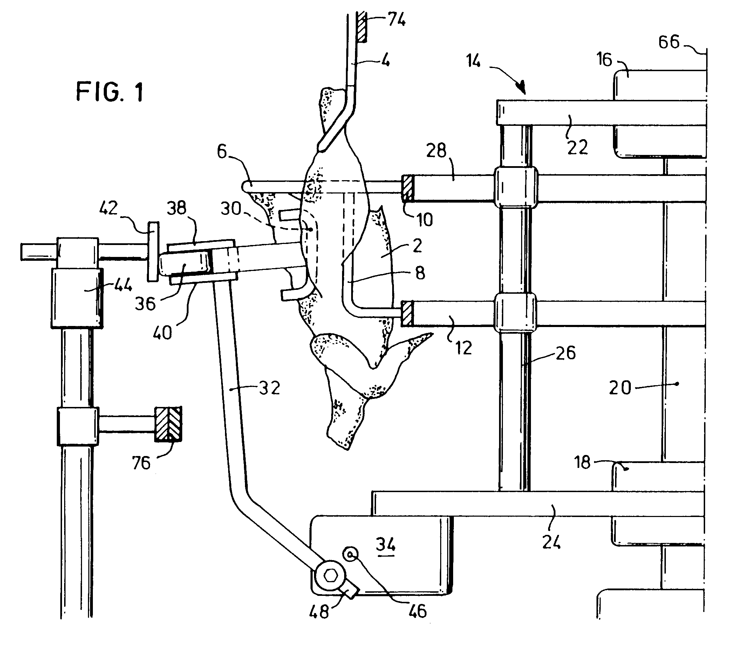

As shown in Fig. 1, the bird 2 is hanging from a shackle 4 which has conventional leg hooks. The position of the bird is stabilized by a conventional leg loop 6 and by a generally vertical rod 8 which contacts the bird where its breast is connected to its thigh. The leg loop 6 and rod 8 are welded to annular rings 10 and 12 of a rotating barrel assembly 14.

The barrel assembly 14 is rotationally supported by bearing assemblies 16 and 18 which are mounted on a fixed main shaft 20. The barrel assembly includes a circular upper plate 22 and a circular lower plate 24 which are connected together by a plurality of vertical rods 26. Horizontal rods 28 extend radially from the vertical rods to support the rings 10 and 12.

The back of the bird in Fig. 1 faces radially outwardly. On the back side of the bird, a disjointing rod member 30 contacts the bird where its thigh is connected to the back. The disjointing rod 30 is mounted on the upper end of an arm 32 which has its lower end pivotally mounted on a block 34 on the lower plate 24. A roller 36 is rotationally mounted on the upper end of the arm by a pair of plates 38 and 40.

In the position shown in Fig. 1, the roller 36 is riding on a linear cam 42 which is adjustably mounted on a support member 44.

The block 34 is provided with a stop 46 located in the path of a tail extension 48 of the arm 32. This stop 46 limits the extent of counterclockwise rotation of the arm 32 after the roller 36 travels past the cam 42.

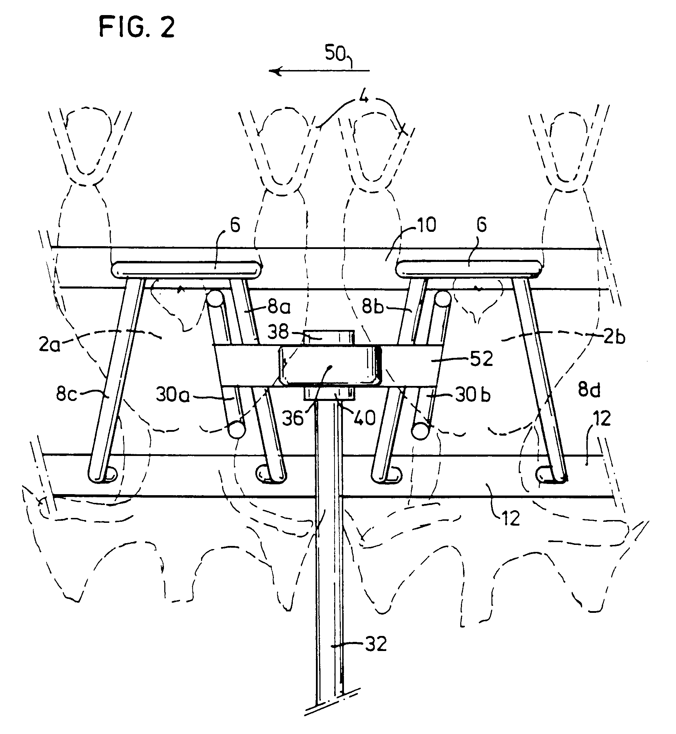

In Fig. 2, the birds are travelling in a direction represented by the arrow 50 so that the first bird 2a precedes the second bird 2b during their movement through the apparatus.

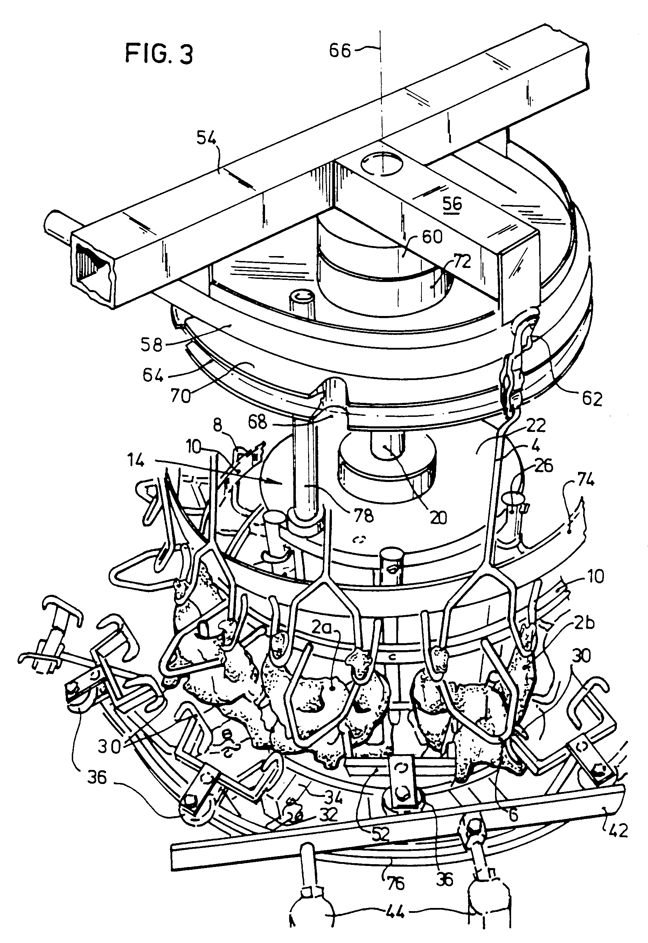

As shown in Fig. 2, the breast positioning members 8a and 8b and the thigh disjointing members 30a and 30b are arranged in pairs. More specifically, the positioning rods 8a and 8b are arranged to contact simultaneously the breast at the trailing leg of the first bird 2a and the breast at the leading leg of the second bird 2b. The disjointing rods 30a and 30b are mounted on a U-shaped bracket 52 (Fig. 3) on the upper end of the arm 32 so that they are fixed relative to each other and arranged to contact simultaneously the thigh of the trailing leg of the first bird 2a and the thigh of the leading leg of the second bird 2b. Thus, a single movement of the arm 32 causes two disjointing rods to cooperate with two positioning rods in a manner so that the thigh joints of two adjacent birds 2a and 2b are disjointed simultaneously.

The positioning rods 8c and 8d shown in Fig. 2 operate in cooperation with other disjointing rods which have been omitted from Fig. 2 for purposes of clarity.

The cooperating pairs of positioning rods 8a and 8b converge toward each other in a downward direction; and, the cooperating pair of disjointing rods 30a and 30b also converge toward each other in a downward direction. The disjointing rods 30a and 30b are spaced farther apart than the positioning rods 8a and 8b.

A more complete machine is shown in Fig. 3. It includes a frame with beams 54, 56 which support a tubular bird-carrying rail 58 and a stationary shaft holder 60. Trolleys 62 connected by a drive chain represented by dot-dash line 64 travel along the rail 58 in an arcuate path, the rotational center of which coincides with the machine's center of rotation 66. Each trolley 62 has a depending portion received in a notch 68 in the circumference of a nylon drive wheel 70 which is rotationally supported on shaft 20 by a bearing assembly 72. The drive wheel 70 has a circumferential groove which receives the drive chain 64 connected to the trolleys. Each trolley 62 carries a conventional cutup shackle 4 with open leg-receiving hooks.

Stationary members shown in Fig. 3 include the beams 54, 56, the shaft 20, a shackle guide bar 74, the flat cam 42, the cam supports 44, and an arm guide bar 76. The purpose of the guide bar 76 is to prelift each arm 32 to a position where its cam-following roller 36 will land properly on the cam 42. After the roller travels beyond the cam 42, the guide bar 76 is shaped to ease the arm 32 downwardly to minimize or eliminate impact when the tail extension 48 of the arm 32 contacts the stop 46 shown in Fig. 1.

The drive wheel 70 is rotated by the movement of the conveyor chain 64, and this rotational movement is transmitted by a vertical eccentric rod 78 to the barrel assembly 14, thus causing the barrel assembly and the components attached to it to rotate at substantially the same velocity as the bird-carrying shackles, trolleys and chain.

When the apparatus is in operation, the birds are hung in the shackles 4 at a position upstream of the disjointing machine. As they approach the disjointing machine, the birds move radially inwardly so their legs straddle the leg loops 6 and their breasts come into contact with the positioning rods 8, 8a, 8b, etc. As each bird moves forward along its arcuate path of travel, its respective disjointing rods 30, 30a, 30b are moved radially inwardly, first against its leading leg and then against its trailing leg, in order to perform the disjointing action in a consecutive manner. In Fig. 3, the bird 2a is having its trailing joint disjointed. At this time, its torso makes a slight counterclockwise movement, and its trailing leg turns in a clockwise direction. Conversely and simultaneously, the leading leg of the second bird 2b rotates counterclockwise while its torso rotates in a clockwise direction. By permitting the torsos to rotate rather than by holding them rigidly, fracturing of the ribs is avoided.

After a disjointing arm 32 has performed its function, it advances and it travels radially outwardly until it falls into contact with the guide bar 76 which gradually lowers it until the tail extension 48 of the arm 32 contacts the stop 46 (Fig. 1).

While only one embodiment of the invention has been shown, persons familiar with the art will realize that the invention may take many other forms. The disjointing bars may be mounted on mechanisms other than swinging arms; the birds may be reversed so that their breasts face outwardly; a single disjointing rod or other member can be mounted at the upper end of each arm; various types of means and directions of movement can be utilized; and, the positioning rods rather than the disjointing rods may be moved to perform the disjointing action. In view of the many ways in which the invention may be practiced, it is emphasized that the invention is not limited to the disclosed embodiment but is embracing of many other types of apparatusses and methods which fall within the scope of the following claims.

## Claims

1. Apparatus for automatically disjointing the thigh joints of birds (2, 2a, 2b) in a poultry processing facility, each of said birds having a breast, a back side, and two thighs; said apparatus including means (4, 62, 64, 70) for supporting the birds and conveying them in a bird processing direction (50), so that a first bird (2a) precedes a second bird (2b) as they move through the apparatus, said apparatus including a plurality of first members (8, 8a, 8b) for retaining the breast sides of the birds, **characterized in that** the apparatus includes a plurality of second members (30, 30a, 30b) for contacting the thighs of the birds on the back sides of the birds, and actuating means (32, 36, 42) for providing relative movement which moves the second members (30, 30a, 30b) toward the first members (8, 8a, 8b), or vice versa, to disjoint the thigh joints of the birds.

2. Apparatus according to claim 1, wherein each bird (2, 2a, 2b) has a leading leg and a trailing leg as it moves through the apparatus, and wherein a pair of said first members (8a, 8b) are fixed relative to each other and are arranged to contact simultaneously the breast of the first bird (2a) and the breast of the second bird (2b),
a pair of second members (30a, 30b) which are fixed relative to each other and are arranged to contact simultaneously the thigh of the trailing leg of the first bird (2a) and the thigh of the leading leg of the second bird (2b), and
said actuating means (32, 36, 42) being operable to provide relative movement which simultaneously moves said pair of second members (30a, 30b) toward said pair of first members (8a, 8b), or vice versa, said apparatus locating the first (2a) and second birds (2b) at positions where said relative movement simultaneously disjoints the thigh joint of the trailing leg of the first bird (2a) and the thigh joint of the leading leg of the second bird (2b).

3. Apparatus according to claim 2, wherein the first pair of members (8a, 8b) are spaced farther apart than the second pair of members (30a, 30b).

4. Apparatus according to claim 2, wherein the second pair of members (30a, 30b) are spaced farther apart than the first pair of members (8a, 8b).

5. Apparatus according to any of claims 2-4, having a rotating support (14), one said pair of members (8a, 8b) being fixed to said rotating support, and on the other said pair of members (30a, 30b) being mounted on an arm (32) which is pivotally connected to said rotating support.

6. Apparatus according to claim 5, having a driven conveyor chain (64) for moving the birds (2) through the apparatus, and means (70, 78) for transmitting driving forces from the driven conveyor chain (64) to the rotating support (14).

7. Apparatus according to any of the preceding claims, wherein the second members (30a, 30b) are positioned to contact the birds (2) where their backs are connected to their thighs.

8. Apparatus according to any one of claim 2-7, wherein the birds (2) are supported for movement in an arcuate path (64) having a center of rotation (66),and the relative movement between the pair of first members (8a, 8b) and the pair of second members (30a, 30b) is in a radial direction relative to said center of rotation.

9. Apparatus according to claim 8, having an arm (32) which supports one said pair of members (30a, 30b), said arm being pivotally mounted to permit simultaneous movement of said pair of members in a radial direction relative to said center of rotation.

10. Apparatus according to claim 9, having a plurality of said arms (32) which each have a pair of members (30a, 30b) mounted thereon, a rotating support (14) to which said arms are pivotally mounted, said rotating support being rotatable about said center of rotation (66), and stationary cam means (42) for engaging and moving the support arms to force the pair of members (30a, 30b) thereon in a radial direction relative to said center of rotation.

11. Apparatus according to any of the preceding claims, wherein the members (8a, 8b) for retaining the breast sides of the birds (2a, 2b) are arranged as a first set, and the members (30a, 30b) for contacting the back sides of the birds are arranged as a second set, and the apparatus has a rotating support (14), said members of one said set being fixed to said rotating support, and said members of the other said set being mounted on arms (32) which are movably connected to said rotating support.

12. Apparatus according to claim 11, wherein the members (30a, 30b) of the other set are arranged in pairs which are rigidly connected to each other and are movable relative to other said pairs of the other set.

13. Apparatus according to claim 11 or claim 12, wherein the members (8a, 8b) of the first set are positioned to contact the birds (2a, 2b) where their breasts are connected to their thighs.

14. Apparatus according to any of claims 11-13, wherein the birds (2a, 2b) are supported for movement in an arcuate path (64) having a center of rotation (66), and the relative movements between the members (8a, 8b) of said first set and the members (30a, 30b) of said second set are in radial directions relative to said center of rotation.

15. Apparatus according to claim 14, wherein said arms (32) are pivotally mounted to permit movement of said members (30a, 30b) of the other said set in a radial direction relative to said center of rotation (66).

16. Apparatus according to claim 15, wherein the actuating means includes a stationary cam (42) for engaging and moving the arms (32) to force the members (30a, 30b) thereon in a radial direction relative to said center of rotation (66).

17. A method of automatically disjointing the thigh joints of birds (2a, 2b) in a poultry processing facility, each of said birds having a breast side, a back side, and two thighs; said method including the steps of:
supporting the birds and conveying them in a bird processing direction (50), so that a first bird (2a) precedes a second bird (2b) as they move through the apparatus, each bird having a leading leg and a trailing leg as it moves through the apparatus;
moving a pair of first members (8a, 8b) into contact (i) with the first bird (2a) in a region where the breast is connected to the thigh of its trailing leg, and (ii) with the second bird (2b) in a region where its breast is connected to the thigh of its leading leg,
moving a pair of second members (30a, 30b) into contact (i) with the first bird (2a) in a region where its back is connected to the thigh of its trailing leg and (ii) with the second bird (2b) in a region where its back is connected to the thigh of its leading leg, providing relative movement which forces said pair of second members toward said pair of first members or vice versa, said first and second birds being at positions where said relative movement simultaneously disjoints the thigh joint of the trailing leg of the first bird and the thigh joint of the leading leg of the second bird.

## Patentansprüche

1. Vorrichtung zum automatischen Trennen der Schenkelgelenke von Vögeln (2, 2a, 2b) in einer Geflügelverarbeitungsanlage, wobei jeder der Vögel eine Brust, einen Rückenteil, und zwei Schenkel hat; wobei die Vorrichtung Mittel (4, 62, 64, 70) zum Tragen und zur Beförderung der Vögel in eine Vogelverarbeitungsrichtung (50) hat, so daß während sie durch die Vorrichtung bewegen, ein erster Vogel (2a) einem zweiten Vogel (2a) vorausgeht, wobei die Vorrichtung eine Vielzahl von ersten Gliedern (8, 8a, 8b) zum Festhalten der Brustseiten der Vögel hat, **dadurch gekennzeichnet**, daß die Vorrichtung eine Vielzahl von zweiten Gliedern (30, 30a, 30b) zum Berühren der Vögelschenkel an den Rückenteilen der Vögel umfasst, und mit Antriebsmitteln (32, 36, 42) zur Herstellung einer relativen Bewegung versehen ist, die die zweiten Glieder (30, 30a, 30b) zu den ersten Gliedern (8, 8a, 8b) bewegt oder umgekehrt, um die Schenkelgelenke der Vögel zu trennen.

2. Vorrichtung nach Anspruch 1, wobei während er durch die Vorrichtung bewegt jeder Vogel (2, 2a, 2b) ein führendes und ein nachschleppendes Bein hat, und wobei ein Paar der ersten Glieder (8a, 8b) aneinander befestigt sind und angeordnet sind um gleichzeitig die Brust des ersten Vogels (2a) und die Brust des zweiten Vogels (2b) zu berühren, ein Paar zweiter Glieder (30a, 30b), die aneinander befestigt sind und angeordnet sind um den Schenkel des nachschleppenden Beines des ersten Vogels (2a) und den Schenkel des führenden Beines des zweiten Vogels (2b) gleichzeitig zu berühren, und die Antriebsmittel (32, 36, 42), die bedienbar sind um eine relative Bewegung herzustellen, die das zweite Gliederpaar (30a, 30b) gleichzeitig zu dem ersten Gliederpaar bewegt oder umgekehrt, wobei die Vorrichtung den ersten (2a) und den zweiten Vogel (2b) in Positionen bringt, wo die relative Bewegung das Schenkelgelenk des nachschleppenden Beines des ersten Vogels (2a) und das Schenkelgelenk des führenden Beines des zweiten Vogels (2b) gleichzeitig trennt.

3. Vorrichtung nach Anspruch 2, wobei das erste Gliederpaar (8a, 8b) weiter auseinander angeordnet sind als das zweite Gliederpaar (30a, 30b).

4. Vorrichtung nach Anspruch 2, wobei das zweite Gliederpaar (30a, 30b) weiter auseinander angeordnet sind als das erste Gliederpaar (8a, 8b).

5. Vorrichtung nach einem der vorhergehenden Ansprüchen 2-4, mit einer drehenden Stütze (14), wobei ein der Gliederpaare (8a, 8b) an der drehenden Stütze befestigt ist, und das andere Gliederpaar (30a, 30b) auf einem, mit der drehenden Stütze schwenkbar verbundenen Arm (32) angeordnet ist.

6. Vorrichtung nach Anspruch 5 mit einer angetriebenen Förderkette (64) um die Vögel (2) durch die Vorrichtung zu bewegen, und Mittel (70, 78) um Antriebskräfte von der angetriebenen Förderkette (64) auf die drehbare Stütze (14) zu übertragen.

7. Vorrichtung nach einem der vorhergehenden Ansprüche, wobei die zweiten Glieder (30a, 30b) angeordnet sind um die Vögel (2) dort zu berühren wo ihre Rücken mit ihren Schenkeln verbunden sind.

8. Vorrichtung nach einem der vorhergehenden Ansprüchen 2-7, wobei die Vögel (2) für eine Bewegung entlang einer Bogenlinie (64) mit einer Rotationsmitte (66) unterstützt werden, und die relative Bewegung zwischen dem ersten Gliederpaar (8a, 8b) und dem zweiten Gliederpaar (30a, 30b) in einer in Bezug auf die Rotationsmitte radialen Richtung liegt.

9. Vorrichtung nach Anspruch 8, mit einem Arm (32), der das erste Gliederpaar (30a, 30b) trägt, wobei der Arm schwenkbar montiert ist um eine gleichzeitige Bewegung des Gliederpaares in einer in Bezug auf die Rotationsmitte radialen Richtung zu gestatten.

10. Vorrichtung nach Anspruch 9, mit einer Vielzahl von Armen (32) wobei auf jedem Arm ein Gliederpaar (30a, 30b) angeordnet ist, eine rotierende Stütze (14) worauf die Arme schwenkbar montiert sind, wobei die drehbare Stütze um die Rotationsmitte (66) drehbar ist, und stationäre Nockenmittel (42) zum Anfassen und Bewegen der Stützarme um das Gliederpaar (30a, 30b) darauf in einer in Bezug auf die Rotationsmitte radialen Richtung zu zwingen.

11. Vorrichtung nach einem der vorhergehenden Ansprüche, wobei die Glieder (8a, 8b) zum Festhalten der Brustseiten der Vögel (2a, 2b) als einen ersten Satz angeordnet sind, und die Glieder (30a, 30b) zur Berührung der Rückenseiten der Vögel als einen zweiten Satz angeordnet sind, und die Vorrichtung eine rotierende Stütze (14) hat, wobei die Glieder des einen Satzes an der rotierenden Stütze befestigt sind, und die Glieder des anderen Satzes auf Arme (32) angeordnet sind, die mit der Stütze bewegbar verbunden sind.

12. Vorrichtung nach Anspruch 11, wobei die Glieder (30a, 30b) des anderen Satzes in Paare angeordnet sind, die miteinander unbeweglich verbunden sind und in Bezug auf andere Paare des anderen Satzes beweglich sind.

13. Vorrichtung nach Anspruch 11 oder 12, wobei die Glieder (8a, 8b) des ersten Satzes, um die Vögel (2a, 2b) zu berühren, dort aufgestellt sind wo ihre Brüste mit ihren Schenkeln verbunden sind.

14. Vorrichtung nach einem der vorhergehenden Ansprüchen 11-13, wobei die Vögel (2a, 2b) für eine Bewegung entlang einer Bogenlinie (64) mit einer Rotationsmitte (66) unterstützt werden, und die relative Bewegungen zwischen den Gliedern (8a, 8b) des ersten Satzes und den Gliedern (30a, 30b) des zweiten Satzes in einer in Bezug auf die Rotationsmitte radialen Richtung liegen.

15. Vorrichtung nach Anspruch 14, wobei die Arme (32) schwenkbar montiert sind um eine Bewegung der Glieder (30a, 30b) des anderen Satzes in einer in Bezug auf die Rotationsmitte (66) radialen Richtung zu gestatten.

16. Vorrichtung nach Anspruch 15, wobei das Antriebsmittel einen stationären Nocken (42) umfasst, zum Anfassen und Bewegen der Arme (32) um die Glieder (30a, 30b) darauf in einer in Bezug auf die Rotationsmitte radialen Richtung zu zwingen.

17. Verfahren zum automatischen Trennen der Schenkelgelenke von Vögeln (2a, 2b) in einer Geflügelverarbeitungsanlage, wobei jeder der Vögel eine Brust, einen Rückenteil und zwei Schenkel hat; wobei dieses Verfahren die folgende Schritte umfasst:
das Stützen und das Fördern der Vögel in eine Vogelverarbeitungsrichtung (50), so daß während sie durch die Vorrichtung bewegen ein erster Vogel (2a) einem zweiten Vogel (2b) vorangeht, wobei jeder Vogel ein führendes und nachschleppendes Bein hat während er durch die Vorrichtung bewegt,
das Bewegen eines ersten Gliederpaares (8a, 8b) um mit einem ersten Vogel (2a), in ein Gebiet wo die Brust mit dem Schenkel des nachschleppenden Beines verbunden ist, in Kontakt zu kommen (i) und (ii) mit dem zweiten Vogel (2b) in ein Gebiet wo seine Brust mit dem Schenkel seines führenden Beines verbunden ist, in Kontakt zo kommen, das Bewegen eines zweiten Gliederpaares (30a, 30b) um (i) mit dem ersten Vogel (2a) in ein Gebiet, wo sein Rücken mit Schenkel seines führenden Beines verbunden ist in Kontakt zu kommen, wobei eine relative Bewegung hergestellt wird, die das zweite Gliederpaar zu dem ersten Gliederpaar zwingt oder umgekehrt, wobei die ersten und die zweiten Vögel sich auf Positionen befinden, wo die relative Bewegung das Schenkelgelenk des nachschleppenden Beines des ersten Vogels und das Schenkelgelenk des führenden Beines des zweiten Vogels gleichzeitig trennt.

## Revendications

1. Machine pour disjoindre automatiquement les articulations de cuisses d'oiseaux (2, 2a, 2b) dans une installation de traitement de volailles, chacun de ces oiseaux ayant une poitrine, un dos et deux cuisses, ladite machine comprenant des moyens (4, 62, 64, 70) destinés à supporter les oiseaux et à les transporter dans une direction (50) de traitement des oiseaux, de manière qu'un premier oiseau (2a) précède un deuxième oiseau (2b) dans son déplacement dans la machine, ladite machine comprenant une pluralité de premiers éléments (8, 8a, 8b) destinés à retenir les côtés de la poitrine des oiseaux, caractérisée en ce que la machine comprend une pluralité de deuxièmes éléments (30, 30a, 30b) destinés à entrer en contact avec les cuisses des oiseaux sur les côtés du dos des oiseaux, et des moyens d'actionnement (32, 36, 42) destinés à engendrer un mouvement relatif qui rapproche les deuxièmes éléments (30, 30a, 30b) des premiers éléments (8, 8a, 8b) ou inversement pour disjoindre les articulations des cuisses des oiseaux.

2. Machine selon la revendication 1, dans laquelle chaque oiseau (2, 2a, 2b) possède une patte placée en avant et une patte placée en arrière lorsqu'il circule à travers la machine, et dans laquelle une paire desdits premiers éléments (8a, 8b) sont fixes l'un par rapport à l'autre et sont agencés pour entrer simultanément en contact avec la poitrine du premier oiseau (2a) et avec la poitrine du deuxième oiseau (2b), une paire de deuxièmes éléments (30a, 30b) qui sont fixes l'un par rapport à l'autre et agencés pour entrer en contact simultanément avec la cuisse de la patte placée en arrière du premier oiseau (2a) et la cuisse de la patte placée en avant du deuxième oiseau (2b), et lesdits moyens d'actionnement (32, 36, 42) pouvant être mis en action pour engendrer un mouvement relatif qui rapproche simultanément ladite paire de deuxièmes éléments (30a, 30b) de ladite paire de premiers éléments (8a, 8b) ou inversement, ladite machine plaçant le premier oiseau (2a) et le deuxième oiseau (2b) dans des positions où ledit mouvement relatif disjoint simultanément l'articulation de cuisse de la patte placée en arrière du premier oiseau (2a) et l'articulation de cuisse de la patte placée en avant du deuxième oiseau (2b).

3. Machine selon la revendication 2, dans laquelle les éléments de la première paire d'éléments (8a, 8b) sont plus largement espacés que ceux de la deuxième paire d'éléments (30a, 30b).

4. Machine selon la revendication 2, dans laquelle les éléments de la deuxième paire d'éléments (30a, 30b) sont plus largement espacés que ceux de la première paire d'éléments (8a, 8b).

5. Machine selon une quelconque des revendications 2 à 4, comprenant un support tournant (14), une desdites paires d'éléments (8a, 8b) étant fixée audit support tournant et ladite autre paire d'éléments (30a, 30b) étant montée sur un bras (32) qui est relié audit support tournant de façon pivotante.

6. Machine selon la revendication 5, ayant une chaîne transporteuse entraînée (64) pour faire circuler les oiseaux (2) à travers la machine, et des moyens (70, 78) pour transmettre des forces d'entraînement de la chaîne transporteuse entraînée (64) au support tournant (14).

7. Machine selon une quelconque des revendications précédentes, dans laquelle les deuxièmes éléments (30a, 30b) sont positionnés pour entrer en contact avec les oiseaux (2) à l'endroit où leurs dos sont joints à leurs cuisses.

8. Machine selon une quelconque des revendications 2 à 7, dans laquelle les oiseaux (2) sont supportés pour se déplacer selon une trajectoire courbe (64) ayant un centre de rotation (66), et le mouvement relatif entre la paire de premiers éléments (8a, 8b) et la paire de deuxièmes éléments (30a, 30b) se produit dans une direction radiale relativement audit centre de rotation.

9. Machine selon la revendication 8, ayant un bras (32) qui supporte une paire d'éléments (30a, 30b), ledit bras étant monté pivotant pour permettre le mouvement simultané de ladite paire d'éléments dans une direction radiale relativement audit centre de rotation.

10. Machine selon la revendication 9, possédant une pluralité desdits bras (32) dont chacun porte une paire d'éléments (30a, 30b) montés sur eux, un support tournant (14) sur lequel lesdits bras sont montés pivotants, ledit support tournant pouvant tourner autour dudit centre de rotation (66), et des moyens formant cames fixes (42) destinés à attaquer et déplacer les bras supports pour forcer la paire d'éléments (30a, 30b) qu'ils portent dans une direction radiale par rapport audit centre de rotation.

11. Machine selon une quelconque des revendications précédentes, dans laquelle les éléments (8a, 8b) destinés à retenir les côtés de la poitrine des oiseaux (2a, 2b) sont disposés en un premier jeu et les éléments (30a, 30b) destinés à entrer en contact avec le dos des oiseaux sont disposés en un deuxième jeu, et la machine possède un support tournant (14), lesdits éléments d'un jeu étant fixés audit support tournant, et lesdits éléments de l'autre jeu étant montés sur des bras (32) qui sont reliés audit support tournant de façon mobile.

12. Machine selon la revendication 11, dans laquelle les éléments (30a, 30b) de l'autre jeu sont agencés en paires qui sont reliées rigidement l'une à l'autre et sont mobiles par rapport aux autres paires de l'autre jeu.

13. Machine selon la revendication 11 ou la revendication 12, dans laquelle les éléments (8a, 8b) du premier jeu sont positionnés pour entrer en contact avec les oiseaux (2a, 2b) à l'endroit où leurs poitrines sont jointes à leurs cuisses.

14. Machine selon une quelconque des revendications 11 à 13, dans laquelle les oiseaux (2a, 2b) sont supportés pour se déplacer en un trajet courbe (64) ayant un centre de rotation (66), et les mouvements relatifs entre les éléments (8a, 8b) dudit premier jeu et les éléments (30a, 30b) dudit deuxième jeu s'effectuent dans des directions radiales par rapport audit centre de rotation.

15. Machine selon la revendication 14, dans laquelle lesdits bras (32) sont montés pivotants pour permettre auxdits éléments (30a, 30b) dudit autre jeu de décrire un mouvement dans une direction radiale par rapport audit centre de rotation (66).

16. Machine selon la revendication 15, dans laquelle le moyen d'actionnement comprend une came fixe (42) destinée à attaquer et déplacer les bras (32) pour forcer les éléments (30a, 30b) portés par ces bras dans une direction radiale par rapport audit centre de rotation (66).

17. Procédé pour disjoindre automatiquement les articulations de cuisses d'oiseaux (2a, 2b), dans une installation de traitement des volailles, chacun des oiseaux ayant un côté poitrine, un dos et deux cuisses ; ledit procédé comprenant les phases consistant à :
supporter les oiseaux et les transporter dans une direction (50) de traitement des oiseaux de telle manière qu'un premier oiseau (2a) précède un deuxième oiseau (2b) dans leur déplacement dans la machine, chaque oiseau ayant une patte placée en avant et une patte placée en arrière lorsqu'il circule à travers la machine ;
mettre une paire de premiers éléments (8a, 8b) en contact (i) avec le premier oiseau (2a) dans une région où la poitrine est jointe à la cuisse de sa patte placée en arrière, et (ii) avec le deuxième oiseau (2b) dans la région où sa poitrine est jointe à la cuisse de sa patte placée en avant,
mettre une paire de deuxièmes éléments (30a, 30b) en contact (i) avec le premier oiseau (2a) dans une région où son dos est joint à la cuisse de sa patte placée en arrière et (ii) avec le deuxième oiseau (2b) dans une région où son dos est joint à la cuisse de sa patte placée en avant, engendrer un mouvement relatif qui rapproche ladite paire de deuxièmes éléments de ladite paire de premiers éléments ou inversement, lesdits premier et deuxième oiseaux étant en des positions où ledit mouvement relatif disjoint simultanément l'articulation de cuisse de la patte placée en arrière du premier oiseau et l'articulation de cuisse de la patte placée en avant du deuxième oiseau.
